# EUROPEAN PATENT SPECIFICATION

(11) **EP 4 318 349 B1**
(45) Date of publication and mention of the grant of the patent: **11.11.2026**
(21) Application number: 22784038.6
(22) Date of filing: 06.04.2022
(51) Int. Cl.: G06Q 10/08, B65G 1/137

(54) **METHOD AND APPARATUS FOR PUTTING AWAY TURNOVER BOX**
VERFAHREN UND VORRICHTUNG ZUM WEGFÜHREN EINER UMDREHSCHACHTEL
PROCÉDÉ ET APPAREIL DE RANGEMENT D'UNE BOÎTE À RETOURNEMENT

(30) Priority: 06.04.2021 CN 202110366021
(43) Date of publication of application: 07.02.2024
(73) Proprietor: Beijing Jingdong Zhenshi Information Technology Co., Ltd., Beijing, Beijing 100086 (CN)
(72) Inventor: SHEN, Jingnan, Beijing 100086 (CN)
(74) Representative: Vossius & Partner Patentanwälte Rechtsanwälte mbB
(86) International application number: PCT/CN2022/085277
(87) International publication number: WO 2022/213972

(56) References cited:
- WO-A1-2017/168678
- CN-A- 106 966 100
- CN-A- 109 544 054
- CN-A- 110 059 992
- CN-A- 110 723 453
- CN-A- 113 762 880

## Description

This application claims priority to Chinese patent application No. 2021103660215, filed with the China National Intellectual Property Administration on April 06, 2021, entitled "Method And Device For Storing Container In Warehouse",

### TECHNICAL FIELD

The present disclosure relates to the technical field of the Internet of Things, and in particular, relates to a method and device for storing a container in a warehouse.

### BACKGROUND

With the development of science and technology, the logistics industry is rapidly transforming from traditional logistics to modern logistics. An automated stereoscopic warehouse for storing commodity is an important part of the modern logistics. The automated stereoscopic warehouse usually includes a plurality of streetlets, each streetlet has a plurality of levels of racks for storing containers, and each container stores one or more commodities. A shuttle vehicle may move horizontally on the rack of a level of the streetlet to take a to-be-retrieved container from a storage location and carry the same to a retrieval buffering location at a streetlet exit on that level, and then a lifer takes the container from the retrieval buffering location and carries the same onto a conveyor line, and the conveyor line transmits the container to a picking workstation for retrieval picking and other operations.

In the related art, in the automated stereoscopic warehouse fully equipped with a plurality of shuttle vehicle, each rack level at each streetlet is provided with one shuttle vehicle which is responsible for the retrieval carrying of all the containers on that rack level of the streetlet. In order to reduce the investment cost of equipment, in some automated stereoscopic warehouses, it does not provide each rack level with one shuttle vehicle, but the shuttle vehicle transmits/changes between different rack levels through a lifter, so that one shuttle vehicle may carry the containers for storage at a plurality of rack levels. Related art can be found in patent applications CN106966100A, CN110059992A and CN109544054A.

However, as the shuttle vehicle needs to continually transmit/change between different rack layers, the storage and retrieval efficiency of the automated stereoscopic warehouse is reduced.

### SUMMARY

Embodiments of the present disclosure provide a method and device for storing a container in a warehouse to resolve the problem in the related art that the storage and retrieval efficiency of the automated stereoscopic warehouse is reduced as the shuttle vehicle needs to continually transmit/change between different rack layers. The invention is set out in the appended set of claims.

In a first aspect, an embodiment of the present disclosure provides a method for storing a container in a warehouse, including:
determining ranking of a first click volume of a to-be-stored container in a first click volume of a stored container at a target streetlet, the first click volume being configured to characterize a retrieval frequency of a container;
determining a matching degree between the to-be-stored container and an available rack of the target streetlet according to the ranking of the first click volume of the to-be-stored container in the first click volume of the stored container at the target streetlet; and
determining a storing rack for the to-be-stored container from the available rack according to the matching degree between the to-be-stored container and the available rack.

In an optional embodiment, determining the storing rack for the to-be-stored container from the available rack includes:
determining a matching value between the to-be-stored container and the available rack according to a matching weight and the matching degree between the to-be-stored container and the available rack;
determining a weighted total cost of storing the to-be-stored container at the available rack according to the matching value between the to-be-stored container and the available rack and a cost term of the available rack; and
determining the storing rack for the to-be-stored container from the available rack according to the weighted total cost of storing the to-be-stored container at the available rack.

In an optional embodiment, the cost item includes at least one of a handling cost of a container lifter, a level-changing cost, and a commodity distributing cost.

In an optional embodiment, determining the matching degree between the to-be-stored container and the available rack of the target streetlet includes:
determining a recommended rack level number for the to-be-stored container according to the ranking of the first click volume of the to-be-stored container in the first click volume of the stored container at the target streetlet and a number of containers that can be stored by a rack of the target streetlet;
determining a recommended rack interval for the to-be-stored container according to the recommended rack level number for the to-be-stored container and a preconfigured confidence parameter; and
determining the matching degree between the to-be-stored container and the available rack according to the recommended rack interval for the to-be-stored container.

In an optional embodiment, determining the matching degree between the to-be-stored container and the available rack according to the recommended rack interval for the to-be-stored container includes:
determining the matching degree between the to-be-stored container and the available rack according to a deviation of a level number at which the available rack is located from the recommended rack interval for the to-be-stored container.

In an optional embodiment, the method further includes, before determining the matching degree between the to-be-stored container and the available rack:
determining the available rack in a rack of the target streetlet.

In an optional embodiment, determining the available rack in the rack of the target streetlet includes:
determining a first rack to be the available rack in response to determining that a loading rate of the first rack of the target streetlet is less than a target loading rate and the first rack includes an empty buffering location, the empty buffering location being configured to store the to-be-stored container.

In an optional embodiment, determining the ranking of the first click volume of the to-be-stored container in the first click volume of the stored container at the target streetlet includes:
determining a second click volume of a stock keeping unit in the to-be-stored container and a second click volume of a stock keeping unit in the stored container, the second click volume being configured to characterize a retrieval frequency of the stock keeping unit;
determining the first click volume of the to-be-stored container and the first click volume of the stored container according to the second click volume of the stock keeping unit in the to-be-stored container and the second click volume of the stock keeping unit in the stored container; and
determining the ranking of the first click volume of the to-be-stored container in the first click volume of the stored container at the target streetlet according to the first click volume of the to-be-stored container and the first click volume of the stored container.

In an optional embodiment, determining the first click volume of the to-be-stored container and the first click volume of the stored container includes:
determining the first click volume of the to-be-stored container according to a sum of the second click volume of the stock keeping unit in the to-be-stored container; and
determining the first click volume of the stored container according to a sum of the second click volume of the stock keeping unit in the stored container.

In an optional embodiment, determining the first click volume of the to-be-stored container and the first click volume of the stored container includes:
determining the first click volume of the to-be-stored container according to a maximum value of the second click volume of the stock keeping unit in the to-be-stored container; and
determining the first click volume of the stored container according to a maximum value of the second click volume of the stock keeping unit in the stored container.

In an optional embodiment, determining the second click volume of the stock keeping unit in the to-be-stored container and the second click volume of the stock keeping unit in the stored container includes:
determining the second click volume of the stock keeping unit in the to-be-stored container and the second click volume of the stock keeping unit in the stored container according to an initial click volume of the stock keeping unit and a click volume of the stock keeping unit within a configured time window.

In a second aspect, an embodiment of the present disclosure provides a device for storing a container in a warehouse, including:
a ranking module, configured to determine ranking of a first click volume of a to-be-stored container in a first click volume of a stored container at a target streetlet, the first click volume being configured to characterize a retrieval frequency of a container;
a matching module, configured to determine a matching degree between the to-be-stored container and an available rack of the target streetlet according to the ranking of the first click volume of the to-be-stored container in the first click volume of the stored container at the target streetlet; and
a determining module, configured to determine a storing rack for the to-be-stored container from the available rack according to the matching degree between the to-be-stored container and the available rack.

In an optional embodiment, the determining module is specifically configured to: determine a matching value between the to-be-stored container and the available rack according to a matching weight and the matching degree between the to-be-stored container and the available rack; determine a weighted total cost of storing the to-be-stored container at the available rack according to the matching value between the to-be-stored container and the available rack and a cost term of the available rack; and determine the storing rack for the to-be-stored container from the available rack according to the weighted total cost of storing the to-be-stored container at the available rack.

In an optional embodiment, the cost item includes at least one of a handling cost of a container lifter, a level-changing cost, and a commodity distributing cost.

In an optional embodiment, the matching module is specifically configured to: determine a recommended rack level number for the to-be-stored container according to the ranking of the first click volume of the to-be-stored container in the first click volume of the stored container at the target streetlet and a number of containers that can be stored by a rack of the target streetlet; determine a recommended rack interval for the to-be-stored container according to the recommended rack level number for the to-be-stored container and a preconfigured confidence parameter; and determine the matching degree between the to-be-stored container and the available rack according to the recommended rack interval for the to-be-stored container.

In an optional embodiment, the matching module is specifically configured to: determine the matching degree between the to-be-stored container and the available rack according to a deviation of a level number at which the available rack is located from the recommended rack interval for the to-be-stored container.

In an optional embodiment, the device further includes:
a screening module, configured to determine the available rack in a rack of the target streetlet.

In an optional embodiment, the screening module is specifically configured to: determine a first rack to be the available rack in response to determining that a loading rate of the first rack of the target streetlet is less than a target loading rate and the first rack includes an empty buffering location, the empty buffering location being configured to store the to-be-stored container.

In an optional embodiment, the ranking module is specifically configured to: determine a second click volume of a stock keeping unit in the to-be-stored container and a second click volume of a stock keeping unit in the stored container, the second click volume being configured to characterize a retrieval frequency of the stock keeping unit; determine the first click volume of the to-be-stored container and the first click volume of the stored container according to the second click volume of the stock keeping unit in the to-be-stored container and the second click volume of the stock keeping unit in the stored container; and determine the ranking of the first click volume of the to-be-stored container in the first click volume of the stored container at the target streetlet according to the first click volume of the to-be-stored container and the first click volume of the stored container.

In an optional embodiment, the ranking module is specifically configured to: determine the first click volume of the to-be-stored container according to a sum of the second click volume of the stock keeping unit in the to-be-stored container; and determine the first click volume of the stored container according to a sum of the second click volume of the stock keeping unit in the stored container.

In an optional embodiment, the ranking module is specifically configured to: determine the first click volume of the to-be-stored container according to a maximum value of the second click volume of the stock keeping unit in the to-be-stored container; and determine the first click volume of the stored container according to a maximum value of the second click volume of the stock keeping unit in the stored container.

In an optional embodiment, the ranking module is specifically configured to: determine the second click volume of the stock keeping unit in the to-be-stored container and the second click volume of the stock keeping unit in the stored container according to an initial click volume of the stock keeping unit and a click volume of the stock keeping unit within a configured time window.

In a third aspect, the present disclosure provides a computer program product including a computer program that, when being executed by a processor, implements any method in the first aspect.

In a fourth aspect, the present disclosure provides an electronic device, including:
a processor; and
a memory, having a computer program stored thereon,
wherein the processor is configured to implement any possible method in the first aspect by executing the computer program.

In a fifth aspect, the present disclosure further provides a non-volatile computer-readable storage medium storing a computer instruction, and the non-volatile computer-readable storage medium has computer programs stored thereon that, when being executed by a processor, implement any possible method in the first aspect.

In the method and device for storing a container in a warehouse in the embodiments of the present disclosure, first, ranking of a first click volume of a to-be-stored container in a first click volume of a stored container at a target streetlet is determined, where the first click volume is configured to characterize a retrieval frequency of a container; then, a matching degree between the to-be-stored container and an available rack of the target streetlet is determined according to the ranking of the first click volume of the to-be-stored container in the first click volume of the stored container at the target streetlet; and finally, a storing rack for the to-be-stored container from the available rack is determined according to the matching degree between the to-be-stored container and the available rack. In comparison with the prior art, in the present disclosure, the containers with a similar retrieval frequency is stored on the same rack level, which reduces the frequency of the shuttle vehicle changing rack level when the shuttle vehicle transports the container, thereby improving the retrieval and storage efficiency of the automated stereoscopic warehouse.

### BRIEF DESCRIPTION OF THE DRAWINGS

In order to more clearly illustrate the technical solution in the present disclosure or the related art, the accompanying drawings, which are to be used in the description of the embodiments or the related art, will be briefly described. It will be obvious that the accompanying drawings in the following description are some embodiments of the present disclosure, and that for those skilled in the art, other accompanying drawings can be obtained according to these drawings without creative work.
FIG. 1 shows a schematic diagram of an automated stereoscopic warehouse according to an embodiment of the present disclosure;
FIG. 2 shows a schematic flow diagram of a method for storing a container in a warehouse according to an embodiment of the present disclosure;
FIG. 3 shows a schematic flow diagram of another for storing a container in a warehouse according to an embodiment of the present disclosure;
FIG. 4 shows a schematic flow diagram of further another method for storing a container in a warehouse according to an embodiment of the present disclosure;
FIG. 5 shows a schematic structure diagram of a device for storing a container in a warehouse according to an embodiment of the present disclosure; and
FIG. 6 shows a schematic structure diagram of an electronic device according to an embodiment of the present disclosure.

### DETAILED DESCRIPTION

In order to make the purpose, technical solutions and advantages of the embodiments of the present disclosure clearer, the technical solutions in the embodiments of the present disclosure will be described clearly and completely in the following in conjunction with the accompanying drawings in the embodiments of the present disclosure, and it is obvious that the described embodiments are a part of the embodiments of the present disclosure and not all of the embodiments. Based on the embodiments in the present disclosure, all other embodiments obtained by those skilled in the art without making creative work fall within the protection scope of the present disclosure.

With the development of science and technology, the logistics industry is rapidly transforming from traditional logistics to modern logistics. An automated stereoscopic warehouse for storing commodity is an important part of the modern logistics.

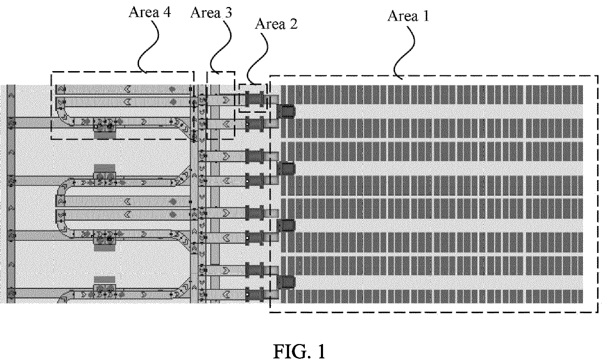

FIG. 1 is a schematic diagram of an automated stereoscopic warehouse according to an embodiment of the present disclosure.

As shown in FIG. 1, the area 1 of the automated stereoscopic warehouse is a container storage area (which may also be referred to as a stereoscopic rack area). The container storage area includes a plurality of streetlets, each streetlet has a plurality of levels of racks, and each level of rack stores the container. The area 2 of the automated stereoscopic warehouse is provided with a shuttle vehicle, which may move horizontally on the rack of a level of the streetlet to take a to-be-retrieved container from a storage location and carry the same to a retrieval buffering location of the area 3 of the automated stereoscopic warehouse at a streetlet exit on that level. Then a lifer takes the container from the retrieval buffering location and carries the same onto a conveyor line of the area 4 of the automated stereoscopic warehouse, and the conveyor line transmits the container to a picking workstation for retrieval picking and other operations.

In the related art, in the automated stereoscopic warehouse fully equipped with a plurality of shuttle vehicle, each rack level at each streetlet is provided with one shuttle vehicle which is responsible for the retrieval carrying of all the containers on that rack level of the streetlet. In order to reduce the investment cost of equipment, in some automated stereoscopic warehouses, it does not provide each rack level with one shuttle vehicle, but the shuttle vehicle is transmitted/changed between different rack levels through a lifter, so that one shuttle vehicle may carry the containers for storage at a plurality of rack levels.

However, as the shuttle vehicle needs to be continually transmitted/changed between different rack layers, the storage and retrieval efficiency of the automated stereoscopic warehouse is reduced.

In order to solve the above problem, an embodiment of the present disclosure provides a method and device for storing a container in a warehouse to improve the storage and retrieval efficiency of the automated stereoscopic warehouse. In the present disclosure, when there is a to-be-stored container, a rack for storing the to-be-stored container may be determined based on a retrieval frequency of the to-be-stored container, so that containers with a similar retrieval frequency are stored on the same rack. In this way, the frequency of the shuttle transmitting/changing between different racks when transporting the containers can be reduced, thereby improving the retrieval and storage efficiency of the automated stereoscopic warehouse.

It can be understood that the application scenario of the technical solution of the present disclosure may be the automated stereoscopic warehouse in FIG. 1, which however is not limited thereto, and may be applied in other types of stereoscopic warehouses.

It can be understood that the above method for storing a container in a warehouse may be realized by the device for storing a container in a warehouse according to the embodiments of the present disclosure, and the device for storing a container in a warehouse may be part or all of a certain device, for example, a server or a chip of a server.

The technical solution of the embodiments of the present disclosure is described in detail below in specific embodiments, by using a server integrated or installed with relevant execution codes as an example. These following specific embodiments may be combined with each other, and the same or similar concepts or processes may not be repeated in certain embodiments.

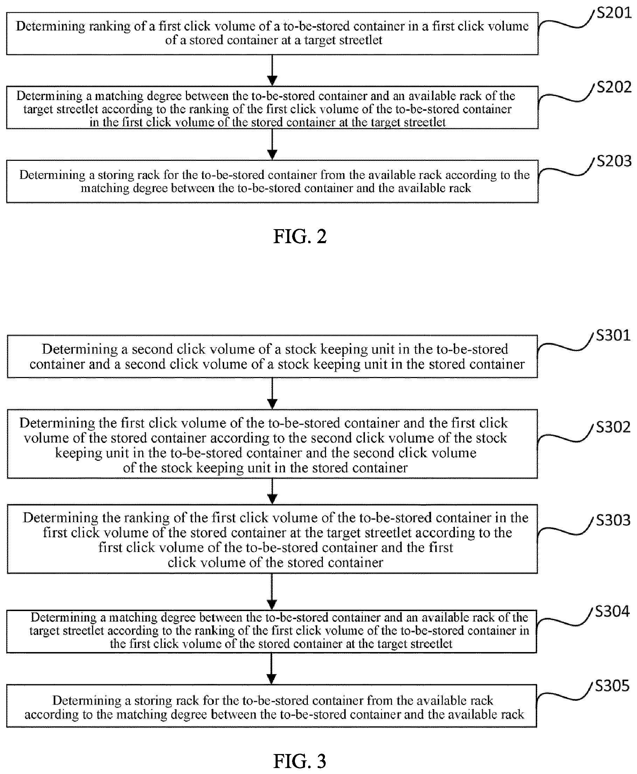

FIG. 2 shows a schematic flow diagram of a method for storing a container in a warehouse according to an embodiment of the present disclosure, which relates to a process of how a server determines a storing rack for a to-be-stored container. As shown in FIG. 2, the method includes operations S201 to S203.

In S201, ranking of a first click volume of a to-be-stored container in a first click volume of a stored container at a target streetlet is determined, the first click volume being configured to characterize a retrieval frequency of a container.

In the present disclosure, when the to-be-stored container has competed the retrieval of a stock keeping unit (SKU) from the warehouse or when a new to-be-stored container is added to the automated stereoscopic warehouse, a storage request for the to-be-stored container may be sent to a server. When the server receives the storage request for the to-be-stored container, it may determine the ranking of the first click volume of the to-be-stored container in the first click volume of the stored container at the target streetlet.

It can be understood that the embodiments of the present disclosure do not limit how the server determines the target streetlet for the to-be-stored container, which may be specifically set according to an actual situation. In some embodiments, different streetlets may store different types of stock keeping units, and the server may determine the target streetlet corresponding to the to-be-stored container by identifying the stock keeping unit stored or to be stored in the to-be-stored container. In some embodiments, the server may calculate the number of containers in different streetlets, and subsequently, use the streetlet with the lower number of containers as the target streetlet for the to-be-stored container.

It can be understood that the embodiments of the present disclosure do not limit how the server determines the ranking of the first click volume of the to-be-stored container in the first click volume of the stored container at the target streetlet. In some embodiments, the server may directly obtain related data of the to-be-stored container and the stored container from a database to determine the ranking of the first click volume of the to-be-stored container in the first click volume of the stored container at the target streetlet.

For example, the server may first determine a second click volume of a stock keeping unit in the to-be-stored container and a second click volume of a stock keeping unit in the stored container, the second click volume being configured to characterize a retrieval frequency of the stock keeping unit. Subsequently, the server may determine the first click volume of the to-be-stored container and the first click volume of the stored container according to the second click volume of the stock keeping unit in the to-be-stored container and the second click volume of the stock keeping unit in the stored container. Finally, the server determines the ranking of the first click volume of the to-be-stored container in the first click volume of the stored container at the target streetlet according to the first click volume of the to-be-stored container and the first click volume of the stored container.

The ranking of the first click volume of the to-be-stored container in the first click volume of the stored container at the target streetlet may be based on a descending order of the first click volume of the to-be-stored container and the first click volume of the stored container, or based on an ascending order of the first click volume of the to-be-stored container and the first click volume of the stored container, which is not limited in the embodiments of the present disclosure.

It is to be noted that the stock keeping unit may be understood as the commodity in the container.

The embodiments of the present disclosure do not limit how the server determines the second click volume, and in some embodiments, the server may determine the second click volume of the stock keeping unit in the to-be-stored container and the second click volume of the stock keeping unit in the stored container according to an initial click volume of the stock keeping unit and a click volume of the stock keeping unit within a configured time window.

It can be understood that the first click volume in an embodiment of the present disclosure may be a retrieval frequency or a number of retrieval times of the container, and the second click volume in an embodiment of the present disclosure may be a retrieval frequency, a number of retrieval times, a number of purchase times or a number of order times of a particular stock keeping unit within the container. For example, when a user selects to purchase a certain commodity and thus an order is generated, the server may arrange for the stock keeping unit corresponding to the commodity to be retrieved from the warehouse, and accordingly, the number of retrieval times of the stock keeping unit may be incremented by 1. Subsequently, the server may count the cumulative number of retrieval times of the stock keeping unit within a certain fixed period of time as the second click volume of the stock keeping unit. At the same time, the server may also calculate the first click volume for one container according to the second click volumes of all the stock keeping units in this container in a fixed period of time.

The embodiments of the present disclosure also do not limit how the first click volume may be determined based on the second click volume. Three ways of determining the first click volume based on the second click volume are provided below.

In a first way, if only one stock keeping unit is kept in the container, the first click volume of the container is equal to the second click of the stock keeping unit in the container.

In a second way, if a plurality of stock keeping units are kept in the container, the server may calculate the sum of the second click volumes of all the stock keeping units in the container as the first click volume of the container.

In a third way, if a plurality of stock keeping units are kept in the container, the server may determine a maximum value among the second click volumes of all the stock keeping units in the container as the first click volume of the container.

In an embodiment of the present disclosure, the first click volume of the to-be-stored container may reflect a selling popularity of the stock keeping unit in the to-be-stored container. The server may store the to-be-stored container in which the stock keeping unit with a good selling popularity is located in a lower-positioned rack, and store the to-be-stored container in which the stock keeping unit with a worse selling popularity is located in a higher-positioned rack, so as to reduce the handling cost of the lifter.

In S202, a matching degree between the to-be-stored container and an available rack of the target streetlet is determined according to the ranking of the first click volume of the to-be-stored container in the first click volume of the stored container at the target streetlet.

In this step, after the server determines the ranking of the first click volume of the to-be-stored container in the first click volume of the stored container at the target streetlet, it may determine the matching degree between the to-be-stored container and the available rack of the target streetlet according to the ranking of the first click volume of the to-be-stored container in the first click volume of the stored container at the target streetlet.

In some embodiments, the server may determine a recommended rack level number for the to-be-stored container according to the ranking of the first click volume of the to-be-stored container in the first click volume of the stored container at the target streetlet and a number of containers that can be stored by a rack of the target streetlet. Then, the server determines a recommended rack interval for the to-be-stored container according to the recommended rack level number for the to-be-stored container and a preconfigured confidence parameter. Finally, the server determines the matching degree between the to-be-stored container and the available rack according to the recommended rack interval for the to-be-stored container

The server may specifically determine the matching degree between the to-be-stored container and the available rack according to a deviation of a level number at which the available rack is located from the recommended rack interval for the to-be-stored container.

For example, it is assumed that there are total N levels of racks, which are Rank 1, Rank 2, ......, Rank N by ranking from the bottom level to the top level, and each rack level can store at most Q containers. At the same time, the to-be-stored container and the stored container are ranked according to the first click volume p in descending order, it is assumed that there are Q_{b} containers before the to-be-stored container b. Then, for the to-be-stored container b, the recommended rack level number therefor can be ${l}_{recommend} = \left⌈{Q}_{b}/Q\right⌉$, and accordingly, based on a confidence parameter *r* thereof, the recommended rack interval of the to-be-stored container b is *l*ₘᵢₙ=max(1, *l*_{recomrnend}-*r*), and *l*ₘₐₓ=min(*l*_{recommend}+*r*, *N*), where *r* is a configurable parameter, which can take 0, 1, 2, ...... and so on.

After determining the recommended rack interval for the to-be-stored container b, the matching degree *eₗ* between the to-be-stored container b and the available rack of the *l*^{th} level can be determined by formula (1):
${e}_{l} = \left\{\begin{matrix}\left(l-{l}_{max}\right) / N , l > {l}_{max} \\ \frac{\left({l}_{min}-l\right)}{N} , l < {l}_{min} \\ {e}_{l} = 0 , l ∈ \left[{l}_{min}, {l}_{max}\right]\end{matrix}\right.$ (1)
where the value range of *eₗ* is [0,1], and the smaller *eₗ* is, the better the matching degree between the to-be-stored container b and the available rack of the *l*^{th} level is.

In S203, a storing rack for the to-be-stored container from the available rack is determined according to the matching degree between the to-be-stored container and the available rack.

In this step, after the server determines the matching degree between the to-be-stored container and the available rack of the target streetlet, the server may determine the storing rack for the to-be-stored container from the available rack according to the matching degree between the to-be-stored container and the available rack.

In some embodiments, the server may directly select the available rack with the best matching degree as the storing rack for the to-be-stored container.

In some other embodiments, the server, in addition to referring to the matching degree between the to-be-stored container and the available rack, may further refer to a cost item of the available rack of each level to comprehensively determine the storing rack for the to-be-stored container.

For example, the server may first determine a matching value between the to-be-stored container and the available rack according to a matching weight and the matching degree between the to-be-stored container and the available rack. Then, the server may determine a weighted total cost of storing the to-be-stored container at the available rack according to the matching value between the to-be-stored container and the available rack and a cost term of the available rack. Finally, the server may determine the storing rack for the to-be-stored container from the available rack according to the weighted total cost of storing the to-be-stored container at the available rack.

The cost item includes at least one of a handling cost of a container lifter, a level-changing cost, and a commodity distributing cost.

For example, if the matching degree between the to-be-stored container b and the available rack of the *l*^{th} level is *e^{l},* the server may calculate a matching value *Eₗ*=*βₗeₗ* between the to-be-stored container b and the available rack of the *l*^{th} level, where *βₗ* is a matching weight, which may be set according to an actual situation. After determining the matching value *Eₗ* between the to-be-stored container b and the available rack of the *l*^{th} level, the server may consider the matching value *Eₗ* together with other cost items (e.g., a level-changing cost *Cₗ,* a commodity distributing cost *Uₗ* and the like), and calculate the weighted total cost S of storing the to-be-stored container b at the available rack of the *l*^{th} level by means of formula (2):
$S = {E}_{l} + {C}_{l} + {U}_{l} + ⋯$ (2)

Subsequently, the server may select the available rack with the smallest weighted total cost S as the storing rack for the to-be-stored container b. If there are a plurality of levels with the same weighted total cost, a rack level may be randomly selected therefrom as the storing rack for the to-be-stored container b.

In the method for storing a container in a warehouse in the embodiments of the present disclosure, first, ranking of a first click volume of a to-be-stored container in a first click volume of a stored container at a target streetlet is determined, where the first click volume is configured to characterize a retrieval frequency of a container; then, a matching degree between the to-be-stored container and an available rack of the target streetlet is determined according to the ranking of the first click volume of the to-be-stored container in the first click volume of the stored container at the target streetlet; and finally, a storing rack for the to-be-stored container from the available rack is determined according to the matching degree between the to-be-stored container and the available rack. In comparison with the prior art, in the present disclosure, the containers with a similar retrieval frequency is stored on the same rack level, which reduces the frequency of the shuttle vehicle changing rack level when the shuttle vehicle transports the container, thereby improving the retrieval and storage efficiency of the automated stereoscopic warehouse.

On the basis of the above embodiments, it describes below how the server determines the ranking of the first click volume of the to-be-stored container in the first click volume of the stored container at the target streetlet. FIG. 3 shows a flow diagram of another method for storing a container in a warehouse according to an embodiment of the present disclosure. As shown in FIG. 3, the method includes operations S301 to S305.

In S301, a second click volume of a stock keeping unit in the to-be-stored container and a second click volume of a stock keeping unit in the stored container are determined, the second click volume being configured to characterize a retrieval frequency of the stock keeping unit.

In some embodiments, the server may determine the second click volume of the stock keeping unit in the to-be-stored container and the second click volume of the stock keeping unit in the stored container according to an initial click volume of the stock keeping unit and a click volume of the stock keeping unit within a configured time window.

For example, the server may calculate the second click volume of the stock keeping unit in each container respectively. For a new container or a new stock keeping unit, the server may set an initial click volume Click*ₛ₀* for the stock keeping unit SKU*ₛ* according to planning data and configure a time window W.

If the stock keeping unit SKU*ₛ* is stored for more than W, the second click volume Clickₛ of the SKUₛ may be calculated by using the moving average analysis, and the calculation of Clickₛ is as the following formula (3). ${Click}_{s} = \frac{{\sum }_{i = 1}^{W} i ⋅ {Click}_{si}}{{\sum }_{i = 1}^{W} i}$ (3)

If the stock keeping unit SKU*ₛ* is stored for less than W, and is stored for W', Click*ₛ₀* may be used to make up the missing days, and the calculation of Clickₛ is as the following formula (4).${Click}_{s} = \frac{{\sum }_{i = 1}^{W - W ′} i ⋅ {Click}_{s 0} + {\sum }_{i = W - W ′ + 1}^{W} i ⋅ {Click}_{si}}{{\sum }_{i = 1}^{W} i}$ (4)

In S302, the first click volume of the to-be-stored container and the first click volume of the stored container are determined according to the second click volume of the stock keeping unit in the to-be-stored container and the second click volume of the stock keeping unit in the stored container.

An embodiment of the present disclosure provides two ways of determining the first click volume of the to-be-stored container and the first click volume of the stored container.

In a first way, the server may determine the first click volume of the to-be-stored container according to a sum of the second click volume of the stock keeping unit in the to-be-stored container; and at the same time, determine the first click volume of the stored container according to a sum of the second click volume of the stock keeping unit in the stored container.

For example, if a set of SKUs kept in the container b is *S_{b},* the first click volume *p_{b}* of the container *b* may be calculated by formula (5):${p}_{b} = {\sum }_{s ∈ {S}_{b}} {Click}_{s}$ (5)

In a second way, the server may determine the first click volume of the to-be-stored container according to a maximum value of the second click volume of the stock keeping unit in the to-be-stored container; and at the same time, determine the first click volume of the stored container according to a maximum value of the second click volume of the stock keeping unit in the stored container.

For example, if a set of SKUs kept in the container b is *S_{b},* the first click volume *p_{b}* of the container *b* may be calculated by formula (6):${p}_{b} = {max}_{s ∈ {S}_{b}} {Click}_{s}$ (6)

In S303, the ranking of the first click volume of the to-be-stored container in the first click volume of the stored container at the target streetlet is determined according to the first click volume of the to-be-stored container and the first click volume of the stored container.

It can be understood that the embodiments of the present disclosure do not limit the way in which the first click volume is ranked, and in some embodiments, the server may rank the first click volume of the to-be-stored container and the first click volume of the stored container in a descending order, and in some other embodiments, the server may rank the first click volume of the to-be-stored container and the first click volume of the stored container in an ascending order.

In S304, a matching degree between the to-be-stored container and an available rack of the target streetlet is determined according to the ranking of the first click volume of the to-be-stored container in the first click volume of the stored container at the target streetlet.

In S305, a storing rack for the to-be-stored container from the available rack is determined according to the matching degree between the to-be-stored container and the available rack.

The technical terms, technical effects, technical features, and optional implementations in S304-S305 may be understood with reference to S202-S203 shown in FIG. 2, which will not be repeated here.

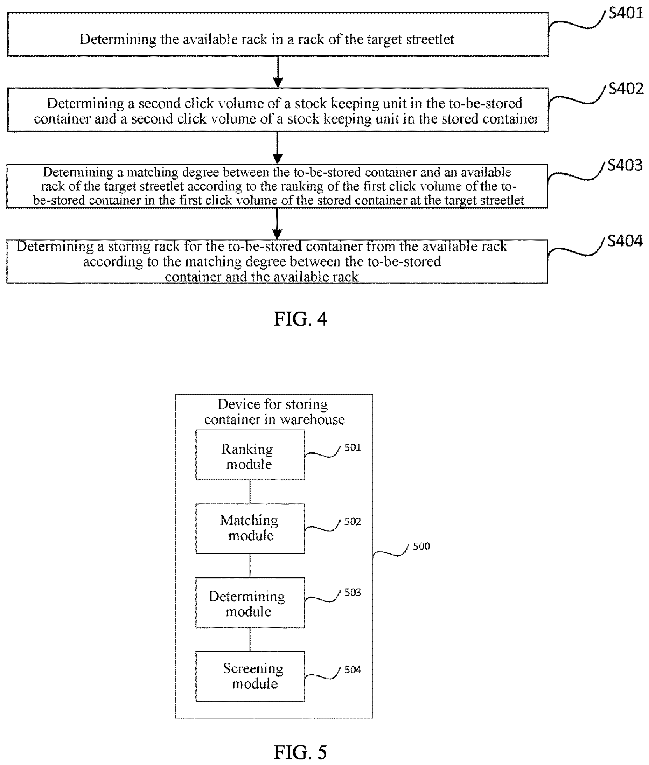

On the basis of the above embodiments, it describes below how the server determines the available rack at the target streetlet. FIG. 4 shows a flow diagram of yet another method for storing a container in a warehouse according to an embodiment of the present disclosure. As shown in FIG. 4, the method includes operations S401 to S404.

In S401, the available rack is determined in a rack of the target streetlet.

The available rack can be understood as a rack that can store the to-be-stored container.

The embodiments of the present disclosure do not limit how the available rack is determined. In some embodiments, a first rack is determined to be the available rack if a loading rate of the first rack of the target streetlet is less than a target loading rate and the first rack includes an empty buffering location. The empty buffering location is configured to store the to-be-stored container. In some other embodiments, a second rack may also be determined to be the available rack if a loading rate of the second rack of the target streetlet is less than the target loading rate and a shuttle vehicle is present on the second rack.

In S402, ranking of a first click volume of a to-be-stored container in a first click volume of a stored container at a target streetlet is determined, the first click volume being configured to characterize a retrieval frequency of a container.

In S403, a matching degree between the to-be-stored container and an available rack of the target streetlet is determined according to the ranking of the first click volume of the to-be-stored container in the first click volume of the stored container at the target streetlet.

In S404, a storing rack for the to-be-stored container from the available rack is determined according to the matching degree between the to-be-stored container and the available rack.

The technical terms, technical effects, technical features, and optional implementations in S402-S404 may be understood with reference to S201-S203 shown in FIG. 2, which will not be repeated here.

In the method for storing a container in a warehouse in the embodiments of the present disclosure, first, ranking of a first click volume of a to-be-stored container in a first click volume of a stored container at a target streetlet is determined, where the first click volume is configured to characterize a retrieval frequency of a container; then, a matching degree between the to-be-stored container and an available rack of the target streetlet is determined according to the ranking of the first click volume of the to-be-stored container in the first click volume of the stored container at the target streetlet; and finally, a storing rack for the to-be-stored container from the available rack is determined according to the matching degree between the to-be-stored container and the available rack. In comparison with the prior art, in the present disclosure, the containers with a similar retrieval frequency is stored on the same rack level, which reduces the frequency of the shuttle vehicle changing rack level when the shuttle vehicle transports the container, thereby improving the retrieval and storage efficiency of the automated stereoscopic warehouse.

The method for warehousing containers provided by embodiments of the present disclosure first determines a first hit ranking of the containers to be warehoused among the warehoused containers in the target streetlet, the first hit being used to characterise the frequency of warehousing of the containers. Subsequently, a degree of match between the to-be-stored container and the available shelving in the target streetlet is determined based on the first hit ranking of the to-be-stored container among the stored containers in the target streetlet. Finally, based on the degree of match between the to-be-stored containers and the available shelves, an inbound rack for the to-be-stored containers is determined from the available shelves. Compared with the prior art, the present disclosure stores the containers with similar retrieval frequency in the same level of shelves, so as to reduce the frequency of changing levels between different shelves when the shuttle truck is transporting the containers, and thereby improve the efficiency of the access and egress of the automated stereoscopic warehouse.

Those skilled in the art may understand that all or part of the steps for realizing the above method embodiment may be completed by hardware related to program instructions, the foregoing program may be stored in a computer-readable storage medium, the program, when being executed, performs the steps including the above method embodiment, and the foregoing storage medium includes a variety of mediums that can store program codes, such as a ROM, a RAM, a magnetic disc, a compact disc or the like.

FIG. 5 shows a schematic structure diagram of a device for storing a container in a warehouse according to an embodiment of the present disclosure. The device for storing a container in a warehouse may be implemented by software, hardware, or a combination thereof, and may be, for example, a server or a chip of a server in the above embodiment, to perform the method for storing a container in a warehouse in the above embodiment. As shown in FIG. 5, the device 500 for storing a container in a warehouse includes:
a ranking module 501, configured to determine ranking of a first click volume of a to-be-stored container in a first click volume of a stored container at a target streetlet, the first click volume being configured to characterize a retrieval frequency of a container;
a matching module 502, configured to determine a matching degree between the to-be-stored container and an available rack of the target streetlet according to the ranking of the first click volume of the to-be-stored container in the first click volume of the stored container at the target streetlet; and
a determining module 503, configured to determine a storing rack for the to-be-stored container from the available rack according to the matching degree between the to-be-stored container and the available rack.

In an optional embodiment, the determining module 503 is specifically configured to: determine a matching value between the to-be-stored container and the available rack according to a matching weight and the matching degree between the to-be-stored container and the available rack; determine a weighted total cost of storing the to-be-stored container at the available rack according to the matching value between the to-be-stored container and the available rack and a cost term of the available rack; and determine the storing rack for the to-be-stored container from the available rack according to the weighted total cost of storing the to-be-stored container at the available rack.

In an optional embodiment, the cost item includes at least one of a handling cost of a container lifter, a level-changing cost, and a commodity distributing cost.

In an optional embodiment, the matching module 502 is specifically configured to: determine a recommended rack level number for the to-be-stored container according to the ranking of the first click volume of the to-be-stored container in the first click volume of the stored container at the target streetlet and a number of containers that can be stored by a rack of the target streetlet; determine a recommended rack interval for the to-be-stored container according to the recommended rack level number for the to-be-stored container and a preconfigured confidence parameter; and determine the matching degree between the to-be-stored container and the available rack according to the recommended rack interval for the to-be-stored container.

In an optional embodiment, the matching module 502 is specifically configured to: determine the matching degree between the to-be-stored container and the available rack according to a deviation of a level number at which the available rack is located from the recommended rack interval for the to-be-stored container.

In an optional embodiment, the device further includes:
a screening module 504, configured to determine the available rack in a rack of the target streetlet.

In an optional embodiment, the screening module 504 is specifically configured to: determine a first rack to be the available rack in response to determining that a loading rate of the first rack of the target streetlet is less than a target loading rate and the first rack includes an empty buffering location, the empty buffering location being configured to store the to-be-stored container.

In an optional embodiment, the ranking module 501 is specifically configured to: determine a second click volume of a stock keeping unit in the to-be-stored container and a second click volume of a stock keeping unit in the stored container, the second click volume being configured to characterize a retrieval frequency of the stock keeping unit; determine the first click volume of the to-be-stored container and the first click volume of the stored container according to the second click volume of the stock keeping unit in the to-be-stored container and the second click volume of the stock keeping unit in the stored container; and determine the ranking of the first click volume of the to-be-stored container in the first click volume of the stored container at the target streetlet according to the first click volume of the to-be-stored container and the first click volume of the stored container.

In an optional embodiment, the ranking module 501 is specifically configured to: determine the first click volume of the to-be-stored container according to a sum of the second click volume of the stock keeping unit in the to-be-stored container; and determine the first click volume of the stored container according to a sum of the second click volume of the stock keeping unit in the stored container.

In an optional embodiment, the ranking module 501 is specifically configured to: determine the first click volume of the to-be-stored container according to a maximum value of the second click volume of the stock keeping unit in the to-be-stored container; and determine the first click volume of the stored container according to a maximum value of the second click volume of the stock keeping unit in the stored container.

In an optional embodiment, the ranking module 501 is specifically configured to: determine the second click volume of the stock keeping unit in the to-be-stored container and the second click volume of the stock keeping unit in the stored container according to an initial click volume of the stock keeping unit and a click volume of the stock keeping unit within a configured time window.

It is to be noted that the device for storing a container in a warehouse in the embodiment shown in FIG. 5 may be used to perform the method provided by any of the above embodiments, and the specific implementation and technical effect are similar, which will not be repeated herein.

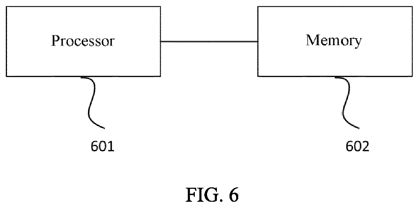

FIG. 6 shows a schematic structure diagram of an electronic device according to an embodiment of the present disclosure. As shown in FIG. 6, the electronic device may include at least one processor 601 and a memory 602. FIG. 6 illustrates the electronic device with one processor as an example.

The memory 602 is configured to store program. Specifically, the program may include program codes, and the program code includes computer operating instructions.

The memory 602 may include a high-speed RAM memory, or may also include a non-volatile memory such as at least one disk memory.

The processor 601 is configured to execute the computer-executed instructions stored in the memory 602 to implement the method of processing the business data described above.

The processor 601 may be a Central Processing Unit (CPU), or an Application Specific Integrated Circuit (ASIC), or one or more integrated circuits configured to implement the embodiments of the present disclosure.

Optionally, in a specific implementation, if the communication interface, the memory 602, and the processor 601 are implemented independently, they may be connected to each other via a bus to communicate with each other. The bus may be an Industry Standard Architecture (ISA) bus, a Peripheral Component (PCI) bus, or an Extended Industry Standard Architecture (EISA) bus. The bus may be classified into address bus, data bus, control bus or the like, which however does not mean that there is only one bus or one type of bus.

Optionally, in a specific implementation, if the communication interface, the memory 602 and the processor 601 are integrated and implemented on a single chip, they may communicate with each other through an internal interface.

An embodiment of the present application also provides a chip including a processor and an interface. The interface is configured to input and output data or instructions processed by the processor. The processor is configured to execute the method provided in the above method embodiment. The chip can be used in the device for storing a container in a warehouse.

The present disclosure also provides a computer-readable storage medium, which may include: a USB flash drive, a removable hard disk, a read-only memory (ROM), a random access memory (RAM), a magnetic disk, or a compact disc, and other kinds of media that can store program codes, and specifically, the computer readable storage medium has program information stored thereon, and the program information is used in the method for storing a container in a warehouse.

An embodiment of the present disclosure also provides a program which, when being executed by a processor, is used to execute the method for storing a container in a warehouse provided by the above method embodiments.

An embodiment of the present disclosure also provides a program product, such as a computer-readable storage medium, which has instructions stored thereon which, when run on a computer, cause the computer to execute the method for storing a container in a warehouse provided by the above method embodiments.

The above embodiments may be implemented in whole or in part by software, hardware, firmware, or any combination thereof. When being implemented by software, the above embodiments may be implemented in whole or in part in the form of a computer program product. The computer program product includes one or more computer programs. When the computer program is loaded and executed on a computer, the process or function according to the embodiments of the present disclosure is generated in whole or in part. The computer may be a general-purpose computer, a special purpose computer, a computer network, or other programmable device. The computer program may be stored in a computer-readable storage medium or transmitted from one computer-readable storage medium to another computer-readable storage medium, e.g., the computer program may be transmitted from a web site, computer, server or data center to another web site, computer, server or data center via wired (e.g., coaxial cable, optical fiber, digital subscriber line (DSL)) or wireless (e.g., infrared, wireless, microwave, etc.) way. The computer-readable storage medium may be any usable medium which a computer can access or a data storage device such as a server, data center including one or more usable media integrated. The usable medium may be a magnetic medium (e.g., floppy disk, hard disk, tape), an optical medium (e.g., DVD), a semiconductor medium (e.g., a solid state disk (SSD)), or the like.

Finally, it is to be noted that the above embodiments are only used to illustrate the technical solution of the present disclosure without limiting the same. Although the present disclosure has been described in detail with reference to the foregoing embodiments, those skilled in the art should understand that it may make modifications to the technical solution recited in the foregoing embodiments or make equivalent substitutions for some or all of the technical features therein, and such modifications or substitutions do not make the nature of the corresponding technical solutions go beyond the scope of the technical solutions of the embodiments of the present disclosure.

## Claims

1. A computer-implemented method for storing a container in a warehouse, comprising:
determining (S201) ranking of a first click volume of a to-be-stored container in a first click volume of a stored container at a target streetlet, the first click volume being configured to characterize a retrieval frequency of a container;
determining a recommended rack level number for the to-be-stored container according to the ranking of the first click volume of the to-be-stored container in the first click volume of the stored container at the target streetlet and a number of containers that can be stored at most by each rack level of the target streetlet by using ${l}_{recommend} = \left⌈{Q}_{b}/Q\right⌉$, where *l*_{recommend} is the recommended rack level number, Q is the number of containers that can be stored at most by each rack level of the target streetlet, and *Q_{b}* is a number of containers before the to-be-stored container when the to-be-stored container and the stored container are ranked according to the first click volume in descending order;
determining, according to the recommended rack level number for the to-be-stored container and a preconfigured confidence parameter, a recommended rack level interval for the to-be-stored container to be between *l*ₘᵢₙ=max(1, *l*_{recommend}-*r*) and *l*ₘₐₓ=min(*l*_{recommend}+*r*, *N*), where *r* is the preconfigured confidence parameter, and N is a total number of rack levels;
determining (S202, S304, S403) a matching degree between the to-be-stored container and an available rack level of the target streetlet according to the recommended rack level interval for the to-be-stored container by using formula (1): ${e}_{l} = \left\{\begin{matrix}\left(l-{l}_{max}\right) / N , l > {l}_{max} \\ \frac{\left({l}_{min}-l\right)}{N} , l < {l}_{min} \\ {e}_{l} = 0 , l ∈ \left[{l}_{min}, {l}_{max}\right]\end{matrix}\right.$ (1)
where a value range of *eₗ* is [0,1], and the smaller *eₗ* is, the better the matching degree between the to-be-stored container and an *l*^{th} available rack level is; and
determining (S203, S305, S404) a storing rack level for the to-be-stored container from the available rack level according to the matching degree between the to-be-stored container and the available rack level.

2. The method according to claim 1, wherein determining (S203, S305, S404) the storing rack level for the to-be-stored container from the available rack level comprises:
determining a matching value between the to-be-stored container and the available rack level according to a matching weight and the matching degree between the to-be-stored container and the available rack level;
determining a weighted total cost of storing the to-be-stored container at the available rack level according to the matching value between the to-be-stored container and the available rack level and a cost term of the available rack level; and
determining the storing rack level for the to-be-stored container from the available rack level according to the weighted total cost of storing the to-be-stored container at the available rack level.

3. The method according to claim 2, wherein the cost item comprises at least one of a handling cost of a container lifter, a level-changing cost, and a commodity distributing cost.

4. The method according to claim 1, wherein determining the matching degree between the to-be-stored container and the available rack level according to the recommended rack level interval for the to-be-stored container comprises:
determining the matching degree between the to-be-stored container and the available rack level according to a deviation of a level number at which the available rack level is located from the recommended rack level interval for the to-be-stored container.

5. The method according to claim 1, further comprising, before determining (S202, S304, S403) the matching degree between the to-be-stored container and the available rack level:
determining (S401) the available rack level in rack levels of the target streetlet.

6. The method according to claim 5, wherein determining the available rack level in the rack levels of the target streetlet comprises:
determining a first rack level to be the available rack level in response to determining that a loading rate of the first rack level of the target streetlet is less than a target loading rate and the first rack level comprises an empty buffering location, the empty buffering location being configured to store the to-be-stored container.

7. The method according to claim 1, wherein determining (S201) the ranking of the first click volume of the to-be-stored container in the first click volume of the stored container at the target streetlet comprises:
determining (S301, S402) a second click volume of a stock keeping unit in the to-be-stored container and a second click volume of a stock keeping unit in the stored container, the second click volume being configured to characterize a retrieval frequency of the stock keeping unit;
determining (S302) the first click volume of the to-be-stored container and the first click volume of the stored container according to the second click volume of the stock keeping unit in the to-be-stored container and the second click volume of the stock keeping unit in the stored container; and
determining (S303) the ranking of the first click volume of the to-be-stored container in the first click volume of the stored container at the target streetlet according to the first click volume of the to-be-stored container and the first click volume of the stored container.

8. The method according to claim 7, wherein determining (S302) the first click volume of the to-be-stored container and the first click volume of the stored container comprises:
determining the first click volume of the to-be-stored container according to a sum of the second click volume of the stock keeping unit in the to-be-stored container; and
determining the first click volume of the stored container according to a sum of the second click volume of the stock keeping unit in the stored container.

9. The method according to claim 7, wherein determining (S302) the first click volume of the to-be-stored container and the first click volume of the stored container comprises:
determining the first click volume of the to-be-stored container according to a maximum value of the second click volume of the stock keeping unit in the to-be-stored container; and
determining the first click volume of the stored container according to a maximum value of the second click volume of the stock keeping unit in the stored container.

10. The method according to claim 7, wherein determining (S301, S402) the second click volume of the stock keeping unit in the to-be-stored container and the second click volume of the stock keeping unit in the stored container comprises:
determining the second click volume of the stock keeping unit in the to-be-stored container and the second click volume of the stock keeping unit in the stored container according to an initial click volume of the stock keeping unit and a click volume of the stock keeping unit within a configured time window.

11. A computer program product comprising a computer program that, when being executed by a processor, implements the method according to any one of claims 1 to 10.

12. A computer storage medium having a plurality of instructions stored thereon that are adapted to be loaded by a processor and implement a step of the method according to any one of claims 1 to 10.

13. An electronic device, comprising:
a processor; and
a memory, having a computer program stored thereon that is adapted to be loaded by the processor and implement the method according to any one of claims 1 to 10.

## Patentansprüche

1. Computerimplementiertes Verfahren zum Lagern eines Behälters in einem Lager, aufweisend:
Bestimmen (S201) einer Rangfolge eines ersten Klickvolumens eines zu lagernden Behälters in einem ersten Klickvolumen eines gelagerten Behälters an einer Zielgasse, wobei das erste Klickvolumen konfiguriert ist, um eine Abruffrequenz eines Behälters zu charakterisieren;
Bestimmen einer empfohlenen Regalebenennummer für den zu lagernden Behälter gemäß der Rangfolge des ersten Klickvolumens des zu lagernden Behälters in dem ersten Klickvolumen des gelagerten Behälters an der Zielgasse und einer Anzahl von Behältern, die maximal auf jeder Regalebene der Zielgasse gelagert werden können, durch Verwenden von *l_{empfohlen} = [Q_{b}* / *Q]*, wobei *l_{empfohlen}* die empfohlene Regalebenennummer ist, *Q* die Anzahl von Behältern ist, die maximal auf jeder Regalebene der Zielgasse gelagert werden können, und *Q_{b}* eine Anzahl von Behältern vor dem zu lagernden Behälter ist, wenn der zu lagernde Behälter und der gelagerte Behälter gemäß dem ersten Klickvolumen in absteigender Reihenfolge eingestuft werden;
Bestimmen, gemäß der empfohlenen Regalebenennummer für den zu lagernden Behälter und einem vorkonfigurierten Konfidenzparameter, dass ein empfohlenes Regalebenenintervall für den zu lagernden Behälter zwischen *l*ₘᵢₙ = max(1, *l_{empfohlen}*-*r*) und *l*ₘₐₓ = min(*l_{empfohlen}*+*r, N*) liegt, wobei *r* der vorkonfigurierte Konfidenzparameter ist und *N* eine Gesamtanzahl von Regalebenen ist;
Bestimmen (S202, S304, S403) eines Übereinstimmungsgrads zwischen dem zu lagernden Behälter und einer verfügbaren Regalebene der Zielgasse gemäß dem empfohlenen Regalebenenintervall für den zu lagernden Behälter durch Verwenden von Formel (1): ${e}_{l} = \left\{\begin{matrix}\left(l-{l}_{max}\right) / N , l > {l}_{max} \\ \frac{\left({l}_{min}-l\right)}{N} , l < {l}_{min} \\ {e}_{l} = 0 , l ∈ \left[{l}_{min}, {l}_{max}\right]\end{matrix}\right.$ (1)
wobei ein Wertbereich von *eₗ* [0,1] ist, und je kleiner *eₗ* ist, desto besser ist der Übereinstimmungsgrad zwischen dem zu lagernden Behälter und einer *l-ten* verfügbaren Regalebene; und
Bestimmen (S203, S305, S404) einer Lagerregalebene für den zu lagernden Behälter aus der verfügbaren Regalebene gemäß dem Übereinstimmungsgrad zwischen dem zu lagernden Behälter und der verfügbaren Regalebene.

2. Verfahren nach Anspruch 1, wobei das Bestimmen (S203, S305, S404) der Lagerregalebene für den zu lagernden Behälter aus der verfügbaren Regalebene aufweist:
Bestimmen eines Übereinstimmungswerts zwischen dem zu lagernden Behälter und der verfügbaren Regalebene gemäß einem Übereinstimmungsgewicht und dem Übereinstimmungsgrad zwischen dem zu lagernden Behälter und der verfügbaren Regalebene;
Bestimmen von gewichteten Gesamtkosten der Lagerung des zu lagernden Behälters auf der verfügbaren Regalebene gemäß dem Übereinstimmungswert zwischen dem zu lagernden Behälter und der verfügbaren Regalebene und einer Kostenposition der verfügbaren Regalebene; und
Bestimmen der Lagerregalebene für den zu lagernden Behälter aus der verfügbaren Regalebene gemäß den gewichteten Gesamtkosten der Lagerung des zu lagernden Behälters auf der verfügbaren Regalebene.

3. Verfahren nach Anspruch 2, wobei die Kostenposition mindestens eines von Handhabungskosten eines Behälterhebers, Ebenenwechselkosten und Warenverteilungskosten aufweist.

4. Verfahren nach Anspruch 1, wobei das Bestimmen des Übereinstimmungsgrads zwischen dem zu lagernden Behälter und der verfügbaren Regalebene gemäß dem empfohlenen Regalebenenintervall für den zu lagernden Behälter aufweist:
Bestimmen des Übereinstimmungsgrads zwischen dem zu lagernden Behälter und der verfügbaren Regalebene gemäß einer Abweichung einer Ebenennummer, auf der sich die verfügbare Regalebene befindet, von dem empfohlenen Regalebenenintervall für den zu lagernden Behälter.

5. Verfahren nach Anspruch 1, ferner aufweisend, vor dem Bestimmen (S202, S304, S403) des Übereinstimmungsgrads zwischen dem zu lagernden Behälter und der verfügbaren Regalebene:
Bestimmen (S401) der verfügbaren Regalebene in Regalebenen der Zielgasse.

6. Verfahren nach Anspruch 5, wobei das Bestimmen der verfügbaren Regalebene in den Regalebenen der Zielgasse aufweist:
Bestimmen einer ersten Regalebene als die verfügbare Regalebene als Reaktion auf das Bestimmen, dass eine Beladungsrate der ersten Regalebene der Zielgasse kleiner als eine Zielbeladungsrate ist und die erste Regalebene einen leeren Pufferplatz aufweist, wobei der leere Pufferplatz konfiguriert ist, um den zu lagernden Behälter zu lagern.

7. Verfahren nach Anspruch 1, wobei das Bestimmen (S201) der Rangfolge des ersten Klickvolumens des zu lagernden Behälters in dem ersten Klickvolumen des gelagerten Behälters an der Zielgasse aufweist:
Bestimmen (S301, S402) eines zweiten Klickvolumens einer Vorratshaltungseinheit in dem zu lagernden Behälter und eines zweiten Klickvolumens einer Vorratshaltungseinheit in dem gelagerten Behälter, wobei das zweite Klickvolumen konfiguriert ist, um eine Abruffrequenz der Vorratshaltungseinheit zu charakterisieren;
Bestimmen (S302) des ersten Klickvolumens des zu lagernden Behälters und des ersten Klickvolumens des gelagerten Behälters gemäß dem zweiten Klickvolumen der Vorratshaltungseinheit in dem zu lagernden Behälter und dem zweiten Klickvolumen der Vorratshaltungseinheit in dem gelagerten Behälter; und
Bestimmen (S303) der Rangfolge des ersten Klickvolumens des zu lagernden Behälters in dem ersten Klickvolumen des gelagerten Behälters an der Zielgasse gemäß dem ersten Klickvolumen des zu lagernden Behälters und dem ersten Klickvolumen des gelagerten Behälters.

8. Verfahren nach Anspruch 7, wobei das Bestimmen (S302) des ersten Klickvolumens des zu lagernden Behälters und des ersten Klickvolumens des gelagerten Behälters aufweist:
Bestimmen des ersten Klickvolumens des zu lagernden Behälters gemäß einer Summe des zweiten Klickvolumens der Vorratshaltungseinheit in dem zu lagernden Behälter; und
Bestimmen des ersten Klickvolumens des gelagerten Behälters gemäß einer Summe des zweiten Klickvolumens der Vorratshaltungseinheit in dem gelagerten Behälter.

9. Verfahren nach Anspruch 7, wobei das Bestimmen (S302) des ersten Klickvolumens des zu lagernden Behälters und des ersten Klickvolumens des gelagerten Behälters aufweist:
Bestimmen des ersten Klickvolumens des zu lagernden Behälters gemäß einem maximalen Wert des zweiten Klickvolumens der Vorratshaltungseinheit in dem zu lagernden Behälter; und
Bestimmen des ersten Klickvolumens des gelagerten Behälters gemäß einem maximalen Wert des zweiten Klickvolumens der Vorratshaltungseinheit in dem gelagerten Behälter.

10. Verfahren nach Anspruch 7, wobei das Bestimmen (S301, S402) des zweiten Klickvolumens der Vorratshaltungseinheit in dem zu lagernden Behälter und des zweiten Klickvolumens der Vorratshaltungseinheit in dem gelagerten Behälter aufweist:
Bestimmen des zweiten Klickvolumens der Vorratshaltungseinheit in dem zu lagernden Behälter und des zweiten Klickvolumens der Vorratshaltungseinheit in dem gelagerten Behälter gemäß einem anfänglichen Klickvolumen der Vorratshaltungseinheit und einem Klickvolumen der Vorratshaltungseinheit innerhalb eines konfigurierten Zeitfensters.

11. Computerprogrammprodukt, aufweisend ein Computerprogramm, das, wenn es durch einen Prozessor ausgeführt wird, das Verfahren nach einem der Ansprüche 1 bis 10 implementiert.

12. Computerspeicherungsmedium, das mehrere darauf gespeicherten Anweisungen hat, die angepasst sind, um durch einen Prozessor geladen zu werden und einen Schritt des Verfahrens nach einem der Ansprüche 1 bis 10 zu implementieren.

13. Elektronische Vorrichtung, aufweisend:
einen Prozessor; und
einen Speicher, der ein Computerprogramm darauf gespeichert hat, das angepasst ist, um durch den Prozessor geladen zu werden und das Verfahren nach einem der Ansprüche 1 bis 10 zu implementieren.

## Revendications

1. Procédé mis en œuvre par ordinateur permettant de stocker un conteneur dans un entrepôt, comprenant :
la détermination (S201) d'un classement d'un premier volume de clics d'un conteneur à stocker dans un premier volume de clics d'un conteneur stocké au niveau d'une allée cible, le premier volume de clics étant configuré pour caractériser une fréquence de récupération d'un conteneur ;
la détermination d'un numéro de niveau de rayonnage recommandé pour le conteneur à stocker selon le classement du premier volume de clics du conteneur à stocker dans le premier volume de clics du conteneur stocké au niveau de l'allée cible et un nombre de conteneurs pouvant être stockés au maximum par chaque niveau de rayonnage de l'allée cible en utilisant *l_{recommandé} = [Q_{b}*/*Q],* où *l_{recommandé}* est le numéro de niveau de rayonnage recommandé, Q est le nombre de conteneurs pouvant être stockés au maximum par chaque niveau de rayonnage de l'allée cible, et *Q_{b}* est un nombre de conteneurs avant le conteneur à stocker lorsque le conteneur à stocker et le conteneur stocké sont classés selon le premier volume de clics par ordre décroissant ;
la détermination, selon le numéro de niveau de rayonnage recommandé pour le conteneur à stocker et un paramètre de confiance préconfiguré, d'un intervalle de niveau de rayonnage recommandé pour le conteneur à stocker comme étant compris entre *l*ₘᵢₙ *=* max(1, *l*_{recommandé} - *r*) et *l*ₘₐₓ *=* min(*l*_{recommandé} + *r, N*), où *r* est le paramètre de confiance préconfiguré, et N est un nombre total de niveaux de rayonnage ;
la détermination (S202, S304, S403) d'un degré de correspondance entre le conteneur à stocker et un niveau de rayonnage disponible de l'allée cible selon l'intervalle de niveau de rayonnage recommandé pour le conteneur à stocker en utilisant la formule (1) : ${e}_{l} = \left\{\begin{matrix}\left(l-{l}_{max}\right) / N , l > {l}_{max} \\ \frac{\left({l}_{min}-l\right)}{N} , l < {l}_{min} \\ {e}_{l} = 0 , l ∈ \left[{l}_{min}, {l}_{max}\right]\end{matrix}\right.$ (1)
où une plage de valeurs de *eₗ* est [0, 1], et plus *eₗ* est petit, meilleur est le degré de correspondance entre le conteneur à stocker et un *l*^{ième} niveau de rayonnage disponible ; et
la détermination (S203, S305, S404) d'un niveau de rayonnage de stockage pour le conteneur à stocker à partir du niveau de rayonnage disponible selon le degré de correspondance entre le conteneur à stocker et le niveau de rayonnage disponible.

2. Procédé selon la revendication 1, dans lequel la détermination (S203, S305, S404) du niveau de rayonnage de stockage pour le conteneur à stocker à partir du niveau de rayonnage disponible comprend :
la détermination d'une valeur de correspondance entre le conteneur à stocker et le niveau de rayonnage disponible selon un poids de correspondance et le degré de correspondance entre le conteneur à stocker et le niveau de rayonnage disponible ;
la détermination d'un coût total pondéré de stockage du conteneur à stocker au niveau de rayonnage disponible selon la valeur de correspondance entre le conteneur à stocker et le niveau de rayonnage disponible et un terme de coût du niveau de rayonnage disponible ; et
la détermination du niveau de rayonnage de stockage pour le conteneur à stocker à partir du niveau de rayonnage disponible selon le coût total pondéré de stockage du conteneur à stocker au niveau de rayonnage disponible.

3. Procédé selon la revendication 2, dans lequel l'élément coût comprend au moins l'un parmi un coût de manutention d'un élévateur de conteneur, un coût de changement de niveau et un coût de distribution de marchandises.

4. Procédé selon la revendication 1, dans lequel la détermination du degré de correspondance entre le conteneur à stocker et le niveau de rayonnage disponible selon l'intervalle de niveau de rayonnage recommandé pour le conteneur à stocker comprend :
la détermination du degré de correspondance entre le conteneur à stocker et le niveau de rayonnage disponible selon un écart d'un numéro de niveau auquel le niveau de rayonnage disponible est situé par rapport à l'intervalle de niveau de rayonnage recommandé pour le conteneur à stocker.

5. Procédé selon la revendication 1, comprenant en outre, avant de déterminer (S202, S304, S403) le degré de correspondance entre le conteneur à stocker et le niveau de rayonnage disponible :
la détermination (S401) du niveau de rayonnage disponible parmi des niveaux de rayonnage de l'allée cible.

6. Procédé selon la revendication 5, dans lequel la détermination du niveau de rayonnage disponible parmi les niveaux de rayonnage de l'allée cible comprend :
la détermination d'un premier niveau de rayonnage comme étant le niveau de rayonnage disponible en réponse au fait de déterminer qu'un taux de chargement du premier niveau de rayonnage de l'allée cible est inférieur à un taux de chargement cible et que le premier niveau de rayonnage comprend un emplacement tampon vide, l'emplacement tampon vide étant conçu pour stocker le conteneur à stocker.

7. Procédé selon la revendication 1, dans lequel la détermination (S201) du classement du premier volume de clics du conteneur à stocker dans le premier volume de clics du conteneur stocké au niveau de l'allée cible comprend :
la détermination (S301, S402) d'un second volume de clics d'une unité de gestion de stock dans le conteneur à stocker et d'un second volume de clics d'une unité de gestion de stock dans le conteneur stocké, le second volume de clics étant configuré pour caractériser une fréquence de récupération de l'unité de gestion de stock ;
la détermination (S302) du premier volume de clics du conteneur à stocker et du premier volume de clics du conteneur stocké selon le second volume de clics de l'unité de gestion de stock dans le conteneur à stocker et le second volume de clics de l'unité de gestion de stock dans le conteneur stocké ; et
la détermination (S303) du classement du premier volume de clics du conteneur à stocker dans le premier volume de clics du conteneur stocké au niveau de l'allée cible selon le premier volume de clics du conteneur à stocker et le premier volume de clics du conteneur stocké.

8. Procédé selon la revendication 7, dans lequel la détermination (S302) du premier volume de clics du conteneur à stocker et du premier volume de clics du conteneur stocké comprend :
la détermination du premier volume de clics du conteneur à stocker selon une somme du second volume de clics de l'unité de gestion de stock dans le conteneur à stocker ; et
la détermination du premier volume de clics du conteneur stocké selon une somme du second volume de clics de l'unité de gestion de stock dans le conteneur stocké.

9. Procédé selon la revendication 7, dans lequel la détermination (S302) du premier volume de clics du conteneur à stocker et du premier volume de clics du conteneur stocké comprend :
la détermination du premier volume de clics du conteneur à stocker selon une valeur maximale du second volume de clics de l'unité de gestion de stock dans le conteneur à stocker ; et
la détermination du premier volume de clics du conteneur stocké selon une valeur maximale du second volume de clics de l'unité de gestion de stock dans le conteneur stocké.

10. Procédé selon la revendication 7, dans lequel la détermination (S301, S402) du second volume de clics de l'unité de gestion de stock dans le conteneur à stocker et du second volume de clics de l'unité de gestion de stock dans le conteneur stocké comprend :
la détermination du second volume de clics de l'unité de gestion de stock dans le conteneur à stocker et du second volume de clics de l'unité de gestion de stock dans le conteneur stocké selon un volume de clics initial de l'unité de gestion de stock et un volume de clics de l'unité de gestion de stock dans une fenêtre de temps configurée.

11. Produit-programme d'ordinateur comprenant un programme informatique qui, lorsqu'il est exécuté par un processeur, met en œuvre le procédé selon l'une quelconque des revendications 1 à 10.

12. Support de stockage informatique sur lequel sont stockées une pluralité d'instructions qui sont adaptées à être chargées par un processeur et à mettre en œuvre une étape du procédé selon l'une quelconque des revendications 1 à 10.

13. Dispositif électronique, comprenant :
un processeur ; et
une mémoire, sur laquelle est stocké un programme informatique qui est adapté à être chargé par le processeur et à mettre en œuvre le procédé selon l'une quelconque des revendications 1 à 10.
